Europäisches Patentamt

European Patent Office

Office européen des brevets

(11) Publication number: **0 247 821**
A2

(12) **EUROPEAN PATENT APPLICATION**

(21) Application number: **87304633.8**

(22) Date of filing: **26.05.87**

(51) Int. Cl.⁴: **B 29 C 45/00**
B 29 C 45/26, G 11 B 23/037

(30) Priority: **26.05.86 JP 120433/86**

(43) Date of publication of application:
**02.12.87 Bulletin 87/49**

(84) Designated Contracting States:
**AT BE CH DE ES FR GB GR IT LI LU NL SE**

(71) Applicant: **POLYPLASTICS CO. LTD.**
**30 Azuchimachi 2-chome**
**Higashi-ku Osaka-shi (JP)**

(72) Inventor: **Sano, Terutaka**
**933-1, Nakazato**
**Fuji-shi Shizuoka (JP)**

(74) Representative: **Livsey, Gilbert Charlesworth Norris**
**HYDE, HEIDE & O'DONNELL 146 Buckingham Palace**
**Road**
**London SW1W 9TR (GB)**

(54) **Method of manufacturing tape reel.**

(57) A tape reel is produced by injection moulding a unitary
component part of a tape reel, said part being shaped to include
a tape reel side plate, a lidded cylinder disposed so as to be
provided with an opening end at the centre of the side plate, a
tape core or capstan surrounding the outer periphery of the
lidded cylinder, an axial boss provided on an end plate (5) of the
lidded cylinder and serving as a rotational centre, and a plurality
of locating bosses (7). According to the invention, resin is
injected for moulding, by way of gate means formed at the end
plate (5) at a location well spaced from that of the locating
bosses (7).

Fig. 1

EP 0 247 821 A2

**Description**

METHOD OF MANUFACTURING TAPE REEL

This invention relates to a method of manufacturing a video tape reel and a mould for use in the moulding thereof, and more particularly it relates to a tape reel manufacturing method which permits manufacture of a tape reel having an improved gate position and construction with high accuracy characteristics; and the invention extends to a mould for use in such method, and to a reel so produced.

With the recent remarkable development of the electronics industry, the spread of household video tape recorders has been very spectacular. The demand for video tapes and parts therefor has been increasing accordingly. Whilst, it is very important that these parts must be produced with good precision and at high efficiency, of these parts, tape reel parts in particular are required to be of high precision. For, while a video tape recorder stores image and sound signals into tapes and plays them back, a tape reel is a part on which such tape is wound directly and, if any slight deviation from the required precision is present in the reel, it may be a cause of tape distortion and/or crease, which will result in image distortion, noise, and so on.

Broadly stated, this invention provides a method of making a unitary component part of a tape reel by injection moulding a reel component, which said part is shaped to comprise a cylindrical hub closed at one end by means of an end wall and flanged at its other end to define a side plate for the reel, with the end wall being formed firstly, with an axially disposed protrusion defining a centre of rotation for the reel and secondly, with a plurality of upstanding fixing bosses disposed about the protrusion, and intended for interfitment with holes in a second side plate formed separately from the unitary component being moulded, the method being characterized in that in order to mould the said unitary reel component, resin is injected into a mould by way of an injection gate located on the said end wall at a location well spaced from any of the said fixing bosses. The invention embraces a molding device with a gate so arranged and disposed; and it encompasses a unitary reel component when so moulded.

In one advantageous arrangement, a dummy boss of height less than that of the centre boss is moulded on the end wall and the gate is located at the free end of the dummy boss.

As is conventional, a capstan for receiving tape is moulded on the side plate concentric with and surrounding the hub and radial reinforcing ribs extend between the hub and the capstan, and in such an arrangement, moulding may be carried out so that the surface of the capstan is interrupted between a pair of the ribs. Here protrusions may be moulded symmetrically about the outer periphery of the hub and gates located at the protrusions. Preferably, a pair of protrusions is provided, one located to each of the opposite sides of the hub.

In order to set out the problems to be solved, and the solution provided by the invention, reference will be made to the accompanying drawings in which:

Figs. 1 and 2 are each a schematic sectional view showing by way of example a unitary tape reel component part moulded in the manner taught by this invention;

Fig. 3 is a schematic section showing a separately formed, second opposite side plate placed on an end plate tape reel part of Fig. 2 ;

Fig. 4 is a plan view showing protrusions provided on the end wall level with the outer periphery of a cylinder of the tape reel part;

Fig. 5 is a plan view showing gate positions in tape reel parts moulded in the examples of the invention and another comparative example;

Fig. 6 is a plan view showing a tape reel part moulded by means of a conventional mould;

Fig. 7 is a section taken on line A - A′ in Fig. 6;

Fig. 8 is a sectional view showing a mould for moulding a tape reel part in accordance with the invention; and

Fig. 9 is a plan view showing a tape reel part according to another example of this invention.

In these drawings the parts are indicated by reference numerals as follows:-

1 - side plate
2 - cylinder
3 - reinforcing rib
4 - tape core
5 - end wall
5′ - recess
6 - centre boss
7 - caulking boss
8 - dummy boss
9 - opposite side plate
10 - protrusion

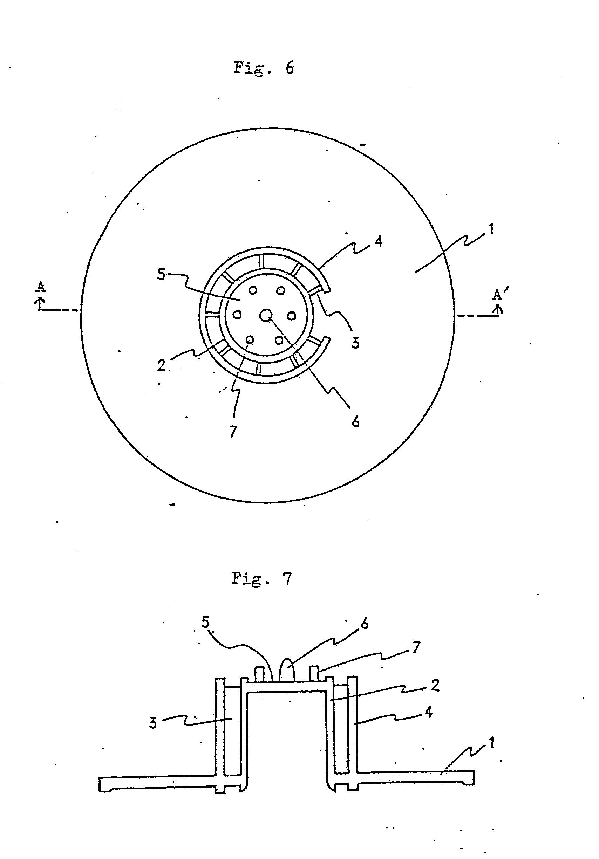

First, the construction of a typical moulded unitary tape reel component part of the kind being discussed herein can be seen from the accompanying drawings, and in particular from Fig. 6 which gives a schematic view in plan of a tape reel part and Fig. 7 which gives a section taken on line A- A′ in Fig. 6.

The unitary moulded component part of a tape reel, the subject of this invention, includes a circular side plate 1, a cylinder 2 located in the centre thereof, and a tape core or capstan 4 surrounding the outer periphery of the cylinder 2 and spaced therefrom by ribs 3. There is provided, on an end wall 5 of the cylinder 2, an axial protrusion 6 which serves as a rotational centre. The unitary moulded component part shown also has a plurality of fixing or caulking bosses 7 surrounding the axial protrusion 6 equally spaced therefrom.

A second separately moulded side plate (not shown in Fig 6, but indicated at 9 in Fig 3), and which will have holes for receiving and interfitting with the fixing bosses 7, will be joined to such a unitary component part as shown in Fig 7, to form a complete tape reel.

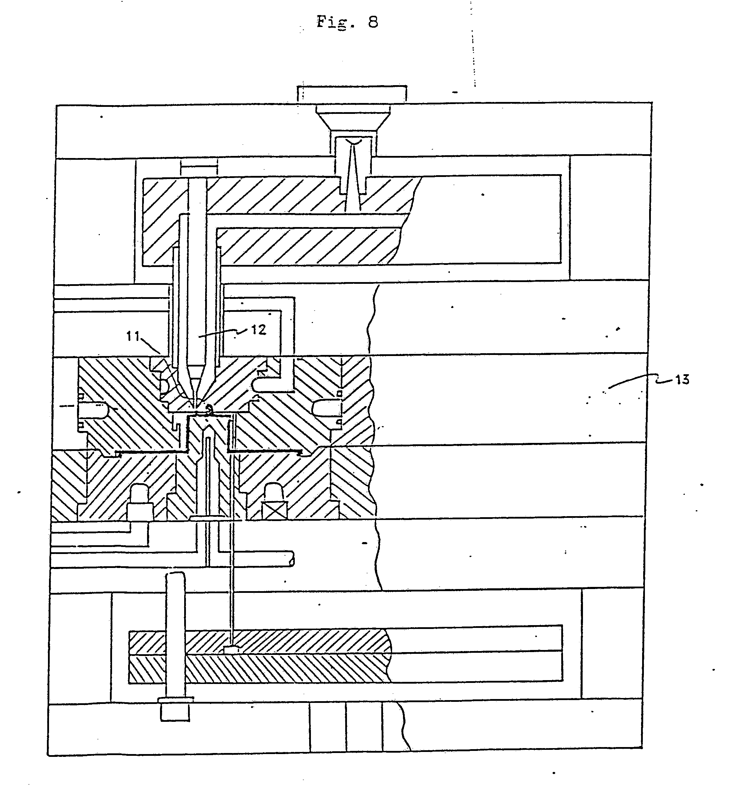

Fig. 8 shows in cross-section, a hot runner mould device for moulding a unitary tape reel component part according to the front gate injection moulding system. The mould 13 has a gate 11 and a hot chip 12. Resin is injected through the gate 11 uniformly into the whole cavity, a unitary component part as shown in Fig 7, for a tape reel, being thus formed.

In the case where such tape reel part is to be made, it is needless to say that the mould as a whole must be of good precision, and in addition it is also important to determine at what location in the mould there should be provided gating through which resin is injected. The reason why gate location is important is that if injection of resin is not uniform, satisfactory cylindricality cannot be achieved for the aforesaid tape core 4 (and the cylinder 2) which elements require a very high order of cylindricality. Variations in contraction will cause distortion to the tape core and other portions and such defects are found particularly to occur when the cooling time is reduced in order to increase the number of moulding cycles. Therefore, gate position selection is a most important factor which has a great bearing upon both the quality and quantity of production.

As such, research has been made on comparative gate positions in moulding methods based on the front gate system, and it has been hitherto proposed to provide gating at one of the locations corresponding to the respective front ends of the caulking bosses 7 (Japanese Utility Model Publication No 58-42108). However, gating at these positions involves the following problems. Firstly, where a gate is above each caulking boss 7, the presence of a gate residue (a fraction of injected resin remaining in the form of a small protrusion at the time of moulding), will cause the volume of the boss for caulking the gate to be larger than intended, and accordingly a caulking horn is brought into contact with more than a preset degree of pressure, with the companion side plate part, and this is liable to result in deformation of the end plate or in cracking of the companion side plate part.

Another problem is that where the caulking boss is broken at the time of gate cutting, the volume of the caulking boss is smaller than intended resulting in inefficient interfitting or caulking with the companion side plate part, which is a cause of looseness with an opposite side plates of the reel being made.

Therefore, further research has now been done with the object of promoting more efficient interfitting and better joining of the companion parts, with insufficient caulking of the two opposite side plates of the reel being avoided. A further objective has been to achieve improved precision of tape reel core configuration, and a reduction in the numbers of defective mould products, as compared with that experienced with the production methods hitherto employed.

The invention provides a method of, and a device for, manufacturing a unitary tape reel component part by injection moulding, in which resin is injected by way of a gate located at the end wall at a position well spaced from the aforementioned fixing or caulking bosses.

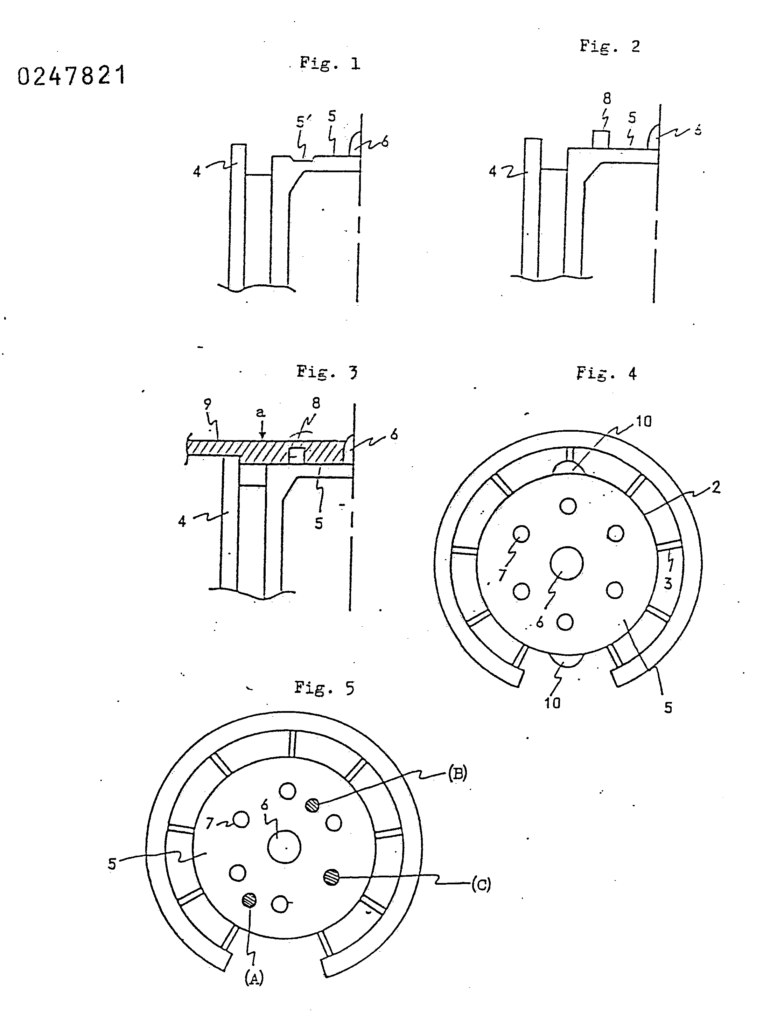

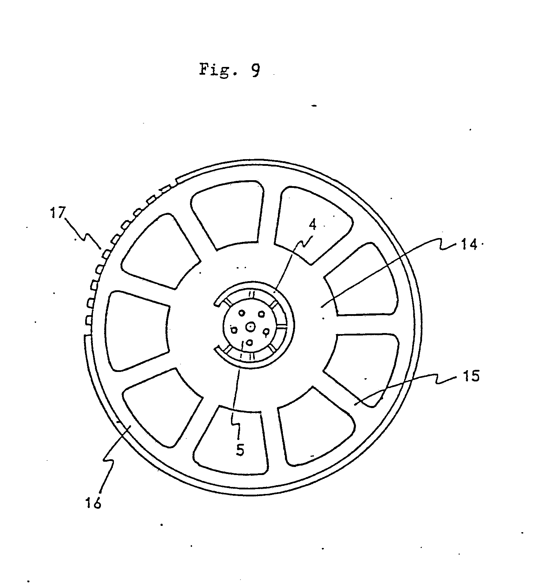

A tape reel mould for use in the manufacturing method according to the invention will now be described with reference to Figures 1 to 5, and to Figures 8 and 9 of the accompanying drawings.

Fig. 1 shows a moulded component provided according to the present proposal, where the gate is disposed at the end wall 5, well spaced from any of the bosses 7. In order to receive and cope with gate residue, the end wall 5 has formed thereon, at the location of the gate, a recess 5'. The tape reel is otherwise conventional and includes a side plate 1, a cylinder 2, reinforcing ribs 3, and caulking bosses 7 (which members are not shown). In order to overcome the problem of gate residue, besides said recess 5', there may be considered further measures, such as the provision of recess means in the adjacent mould wall itself.

In the case where a gate cannot be placed directly on the ceiling plate, a dummy boss 8 may be provided so that a gate can be placed at the front end thereof. Fig. 2 shows a case where a dummy boss 8 is provided on the ceiling plate 5 so that a gate is dropped on the top end thereof.

The gate location will have regard to the number and arrangement of the caulking bosses 7 and to the location and size of any centre boss, and also regard must be had to the configuration of the a hot runner chip 12 (see Fig. 8).

With regard to the number of gates, either a single-point gate arrangement of a multi-point gate arrangement may be used, and which one is selected should be determined having had consideration to the position of each caulking boss, as well as other features of the configuration of the end plate, such as the shape and size of the central boss.

One preferred manner of gate placement is that a gate is placed at the front end of the dummy boss 8, as above mentioned. The height of the dummy boss 8 must be lower than the centre boss 6; and preferably it is at a position level with the top of the companion side plate 9, or at a slightly lower level as shown in Fig. 3 at position a. Fig. 3 illustrates the condition where the two opposite side plates 1 and 9 are fixed in position relative to one another to form the completed reel.

In the case where gating cannot be located for any reason, well within the boundary of the end plate 5, or on a dummy boss 8, one or more protrusions 10 may be provided on the outer periphery of the end plate 5 where it joins with the inner cylinder 2 as shown in Fig. 4, and gates are placed at some or all of said protruding portions. If there are pawls or the like for fixing catch pieces on the outer periphery of the inner cylinder, gating

3

may be made on the pawl portions.

The method of invention is of course applicable also, to the so-called perforated reel. The term "perforated reel" herein refers to a tape reel whose side plates are provided with through holes. The configuration of a preferred perforated reel is such that as Fig. 9 shows by way of example, the tape reel side plate comprises radial ribs 15 extending from a band portion 14 and outer peripheral ribs 16. In Fig. 9, numeral 17 designates stopper teeth. The band portion 14 is intended for tape protection from dust, and if there is no dust possibility it need not be provided.

The tape reel manufacturing method of the invention is applicable to either the hot runner type or the cold runner type, there being no particular limitation.

The resin material used for the purpose of the invention may be any thermoplastic resin conventionally used. Examples of such resin include ABS, polyacetal (homo- or co-polymer), polypropylene, polyethylene, polyalkylene terephthalate, such as polybutylene terephthalate, and polyamides. Depending upon the desired properties, any known filler may be used for mixture. Particularly preferred resins are polyacetals.

Various gate positions, shown with respect to tape reels moulded as shown in Fig. 5, will now be compared having regard to Table I appearing below.

Example 1- A set of tape reel components was moulded wherein gating was made in a recess provided at a position shown by A in Fig. 5 (which recess correspond to 5' in Fig. 1). Example 2- Also, a set of tape reel components was made in which gating was made on a dummy boss provided at a position shown by B in Fig. 5 (which corresponds to 8 in Fig. 2) were moulded. Example 3- For comparison's sake, a further set of components was made with gating provided at the fixing or caulking bosses 7 at a position shown by C in Fig. 5, and evaluation was made in a similar manner. A companion side plate was fixed or caulked to each of the tape reel components so moulded, and the completed reels tested. The results in terms of numbers of defective product per thousand are shown in Table I.

## Table 1

| Expl./Comp.Expl. | Gate Position | Position | Poor * Caulking |
|---|---|---|---|
| Example 1 | Top of end plate 5 | A | 0/1000 |
| Example 2 | Above dummy boss 8 | B | 0/1000 |
| Comp. Example | Above caulking bosses | C | 3/1000 |

\* Side plate looseness, cracking, etc.

## Claims

1. A method of making a unitary component part of a tape reel by injection moulding, which said part is shaped to comprise a cylindrical hub (2) closed at one end by means of an end wall (5) and flanged at its other end to define a side plate (1) for the reel, with the end wall (5) being formed firstly, with an axially disposed protrusion defining a centre of rotation for the reel and secondly, with a plurality of upstanding fixing bosses (7) disposed about the protrusion, and intended for interfitment with holes in a

**0 247 821**

second companion side plate formed separately from and adapted subsequently to be fixed to the unitary component being moulded,

the method being characterized in that in order to mould the said unitary reel component, resin is injected into a mould by way of an injection gate located on the said end wall (5) at a location well spaced from any of the said fixing bosses.

2. A method according to claim 1, wherein a dummy boss (8) of height less than that of the centre boss (6) is moulded on the wall (5) and the gate (11) is located at the free end of the dummy boss (8).

3. A method according to claim 1 or 2, wherein a capstan (4) for receiving tape is moulded on the side plate (1) concentric with and surrounding the hub (2) and radial reinforcing ribs (3) extend between the hub (2) and the capstan (4).

4. A method according to claim 3, wherein moulding is carried out so that the surface of the capstan (4) is interrupted between a pair of the ribs (3).

5. A method according to claim 3 or 4, wherein protrusions (10) are moulded symmetrically about the outer periphery of the hub (2) and gates are located at the protrusions (10).

6. A method according to claim 5, wherein there is a pair of protrusions (10) located to opposite sides of the hub (7).

7. A method according to any preceding claim, wherein the resin is a polyacetal.

8. A method of making a tape reel including a step of attaching to a part made by a method as claimed in any of claims 1 to 7 a second side plate (9) having recesses corresponding to the fixing bosses (7) and in which the fixing bosses (7) are received.

9. A method of manufacturing a tape reel, characterised in that in the process of injection moulding a tape reel part including a tape reel side plate, a lidded cylinder disposed so as to be provided with an opening end at the centre of the side plate, a tape core surrounding the outer periphery of the lidded cylinder, a protrusion provided on a ceiling plate and serving as a rotational centre, and a plurality of caulking bosses, resin is injected for moulding into a gate portion formed on a ceiling plate at a location other than the caulking bosses or a corresponding adjacent location.

10. A method of manufacturing a tape reel as set forth in claim 9, wherein the tape reel side plate comprises radial ribs and peripheral ribs.

11. A tape reel when formed by the method defined in claim 1, or in any claim appendant to claim 1.

12. A moulding device for manufacturing, by the method defined in claim 1, a unitary component part of a tape reel by injection moulding,

which said part is shaped to comprise a cylindrical hub (2) closed at one end by means of an end wall (5) and flanged at its other end to define a side plate (1) for the reel, with the end wall (5) being formed firstly, with an axially disposed protrusion defining a centre of rotation for the reel and secondly, with a plurality of upstanding fixing bosses (7) disposed about the protrusion, and intended for interfitment with holes in a second companion side plate formed separately from and adapted subsequently to be fixed to the unitary component being moulded,

the moulding device being characterised in that, the device has its gate by way of which resin is injected to mould the said unitary reel component, located at a position corresponding to a location on the said end wall (5) when moulded, and at a location well spaced from any of the said fixing bosses.

0247821

Fig. 1

Fig. 2

Fig. 3

Fig. 4

Fig. 5

0247821

Fig. 6

Fig. 7

0247821

Fig. 8

0247821

Fig. 9